Europäisches Patentamt

European Patent Office

Office européen des brevets

(19)

(11) Publication number: **0 069 446**
**A1**

# (12) EUROPEAN PATENT APPLICATION

(21) Application number: 82302226.4

(22) Date of filing: 29.04.82

(51) Int. Cl.³: **F 16 L 1/04**

(30) Priority: 30.04.81 US 258911

(43) Date of publication of application:
12.01.83 Bulletin 83/2

(84) Designated Contracting States:
FR GB NL

(71) Applicant: CONOCO INC.
1000 South Pine Street P.O. Box 1267
Ponca City Oklahoma 74601(US)

(72) Inventor: Morton, Arthur W.
715 Wycliffe
Houston Texas 77079(US)

(74) Representative: Leale, Robin George et al,
FRANK B. DEHN & CO. Imperial House 15-19 Kingsway
London WC2B 6UZ(GB)

(54) Apparatus and method for transporting a conduit at a controllable depth.

(57) A flow line 14 has weight elements 42 connected thereto for making the combination negatively buoyant. At rates of speed above a threshold level, the weight means creates an upward lifting force as the flow line is towed through a body of water 6. The flow line also has depressor elements 44 connected thereto to apply a downward force to the flow line to offset the lifting force created by the weight elements. The depressor elements are located adjacent the weight elements to prevent an oscillating or "snaking" motion from being imparted to the flow line as it is towed through the body of water above the threshold level.

FIG. 1

## APPARATUS AND METHOD FOR TRANSPORTING A
## CONDUIT AT A CONTROLLABLE DEPTH

This invention relates generally to apparatus and methods for transporting a conduit apparatus through a body of water at a controllable depth and more particularly, but not by way of limitation, to apparatus and methods for transporting a flow line through a body of water at a controllable depth.

In offshore oil production operations there is the need for a conduit or flow line to connect a subsea well with a production platform. One type of flow line is constructed on shore and then towed to the site where it is to be connected between the well and the production platform. An example of this type of flow line and of methods of towing the same are disclosed in my co-pending United States Patent Application Serial No. 48,316 filed June 14, 1979, and entitled "Flow Line Bundle and Method of Towing Same."

By the apparatus and method of my aforementioned co-pending application, a flow line is towed in a catenary between two tow vessels. Because the flow line often has a positive buoyancy which would permit the flow line to float at or near the surface of the body of water in which it is towed, chains are placed along the flow line to give it a negative buoyancy whereby the flow line sinks. The flow line sinks, however, only to the depth at which a sufficient amount of the chains engages the sea floor so that the negative buoyancy of the remainder of the chains equals the positive buoyancy of the flow line. This is the depth at which the flow line and chains are neutrally buoyant and below which the flow line and chains will not sink unless some additional force is imposed on the flow line and chain structure. Although the flow line and chains will not normally sink below this depth of neutral buoyancy, the flow line and chains can be raised to shallower depths by applying tension to tow lines connected between the tow vessels and the flow line. During towing at these shallower depths the flow line and chains exhibit a negative buoyancy because additional amounts of the chains no longer engage the sea floor. By using these means, the flow line and chains can sometimes be positioned at a sufficient depth below the surface of the water so that the flow line is unaffected by the conditions at the surface of the body of water. This positioning also permits the normal functioning of equipment, such as a beacon transducer mounted on the flow line, which is designed specifically to operate at relatively deep locations.

It has been discovered, however, that by utilizing the neutral buoyancy technique or the tensioning technique alone or in combination only with each other to achieve an appropriate off-bottom location, this off-bottom depth is maintainable only when the towing proceeds at a speed within a first range of speeds which has been found to be the range of towing speeds of approximately three knots and below for a flow line having a length of a few thousand feet. At a speed within a second range of speeds which is above approximately three knots for this same length of flow line, it has been discovered that the relative movement between the depending chains and the water creates a sufficient lifting force to push the flow line upward toward the surface and above the position established by the neutral buoyancy and/or tensioning techniques above. This effect is disadvantageous because for example, upon rising to the surface, the flow line is susceptible of being affected by the surface conditions. Having the flow line near the surface is also disadvantageous because, for example, subsea beacon transducers connected to the flow line can malfunction at shallow depths. Additionally, the chains can swing in a pendulum motion thereby causing a "snaking" motion to be imparted to the flow line which also affects the towing operation. Therefore, there is the need for a conduit apparatus whose movement at various speeds through a body of water can be controlled so that the apparatus can be transported through the water without being adversely affected by a phenomenon found to exist for certain ranges of towing speeds.

Various means for controlling the movement of subsea cables have been disclosed. Means for controlling the depth of tow of seismic cables are shown in United States Patent No. 3,496,526 in the name of Rockwell, United States Patent No. 3,605,674 in the name of Weese, and United States Patent No. 3,673,556 in the name of Biggs. These means include various types of vanes, water jets, and the like for varying the depth of a cable in response to some type of depth sensing apparatus.

United States Patent No. 2,572,255 in the name of Galloway discloses a buoyant seismic cable having drag chains whereby the cable floats off-bottom with chains dragging the bottom. Seismic transducers on separately buoyed branch lines include vanes to control movement of the branch lines to prevent them from wrapping around the main seismic cable during towing.

United States Patent No. 3,645,224 in the name of Haberman and United States Patent No. 3,921,562 in the name of Kelly relate to depth control during towing of fishing lines and mine sweepers, respectively.

United States Patent No. 4,033,278 in the name of Waters provides lateral positioning control of a seismic cable.

Thus, it is seen that although the prior art does not include depressor means for controlling the depth of tow of certain types of cables and the like, the prior art has not recognized the advantage of using similar depressor means with a catenary towed flow line of the type having a neutral buoyancy or a negative buoyancy with a plurality of chain weights hanging therefrom. Particularly, the prior art has not recognized the problem of the lifting forces created when the chain weights themselves assume a catenary configuration during the movement at speeds within ranges of towing speeds.

The present invention overcomes the above-noted and other shortcomings of the prior art by providing a novel and improved apparatus and method for transporting a conduit apparatus through a body of water at a controllable depth. The present invention overcomes a lifting force which is created by weight means when a flow line having the weight means associated therewith is towed at speeds above a lifting threshold speed. Additionally, the present invention provides means for overcoming a "snaking" motion which is imparted to the flow line by a pendulum motion of the weight means.

Broadly, the apparatus of the present invention comprises a flow line, weight means connected to the flow line for imparting neutral or negative (i.e., non-positive) buoyancy to the flow line, and depressor means connected to the flow line for causing the water to urge the flow line in a direction away from the surface of the body of water in which the flow line is being towed. The depressor means is connected at a location along the flow line which is substantially the same distance from an end of the flow line as the location along the flow line at which the weight means is connected to the flow line.

The towing system of the present invention comprises a first powered vessel, a second powered vessel, a flow line, connecting means for connecting said flow line between the first and second powered vessels and for being tensioned to maintain said flow line at a first position when the first and second vessels move the flow line at a first rate of speed, weight means connected to the flow line for making the flow line either neutrally buoyant or negatively buoyant in the first position when the first and second powered vessels move the flow line at the first rate of speed, which weight means causes a lifting force tending to raise the flow line to a second position above the first position when the first and second powered vessels move the flow line at a second rate of speed, and depressor means connected to the flow line for providing a force to offset the lifting force when the flow line is moved at the second speed.

By the method of the present invention a flow line is transported through a body of water by towing the flow line through the body of water in a catenary fashion. During towing the weight means connected to the flow line sometimes assumes a catenary shape or a plurality of catenary shapes and creates a lifting force acting on the flow line. Controllable depressor means are also connected to the flow line so that a downward force countering the lifting force can be created to position the flow line at a selectable depth.

An embodiment of the invention will now be described by way of example and with reference to the accompanying drawings, in which:-

FIG. 1 is a schematic elevational view of a conduit apparatus of the present invention suspended at a controllable depth a few feet above the ocean floor as it is towed between two vessels in an approximately catenary fashion.

FIG. 2 is a schematic elevational view of the apparatus of FIG. 1 at a different controllable depth above the ocean floor.

FIG. 3 is a cross-sectional view of a preferred embodiment of a flow line of the present invention.

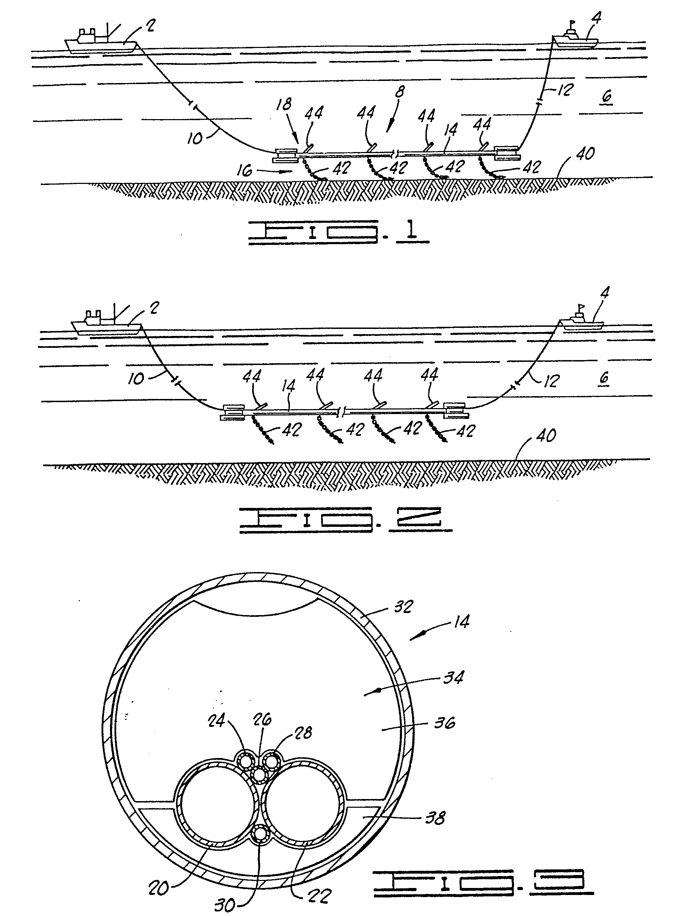

With reference to the drawings a preferred embodiment of the present invention will be described. The system of the present invention is illustrated in FIGS. 1 and 2 to include a first or lead powered vessel 2 and a second or trail powered vessel 4 which can be actuated by suitable drive means (not shown) to move along the surface of a body of water 6. The lead vessel 2 and the trail vessel 4 are used to transport a conduit apparatus 8 which is connected therebetween by suitable connecting means. In the embodiment shown in FIGS. 1 and 2 the connecting means particularly includes a first flexible tow line 10 extending between a first end of the apparatus 8 and suitable retaining means located in the vessel 2 and also includes a second flexible tow line 12 extending between a second end of the apparatus 8 and a suitable retaining structure contained in the vessel 4. The vessels 2 and 4 can move the conduit apparatus 8 in a manner similar to that disclosed in my co-pending United States Patent Application Serial No. 48,316 referred to hereinabove and incorporated herein by reference. For example, when the vessels 2 and 4 operate at a first rate of speed below a threshold speed which will be more fully discussed hereinbelow, the tow lines 2 and 4 are placed in tension so that the flow line is maintained in tension at a desired depth.

The conduit apparatus 8 includes a flow line bundle 14, weight means 16, and depressor means 18.

A preferred embodiment of the flow line bundle 14 is shown in FIG. 3. The flow line 14 includes a plurality of fluid-conducting conduits 20, 22, 24, 26, 28 and 30. The conduits 20-30 are located within an outer tubular covering member 32. By way of example only, in one embodiment of the present invention, conduits 20 and 22 are 3 1/2 inch diameter flow lines. Conduits 24, 26, 28 and 30 are 0.84 inch diameter hydraulic control lines. Tubular covering 32 has a 12 3/4 inch outside diameter.

A polyurethane spacer, generally designated by the reference numeral 34, is connected about the conduits 20-30 and holds the same in a spaced relationship from an inner surface of the outer covering member 32. The spacer member 34 includes first and second spacer components 36 and 38 which are connected together by a plurality of bolts (not shown) or the like. A plurality of similar spacer members (not shown) are longitudinally spaced from spacer members 34 at intervals of approximately fifteen feet along the length of the conduits 20-30.

As shown in FIG. 3 it is desirable to locate the conduits 20-30 toward the bottom side of the covering 32 so that the center of gravity of the flow line bundle 14 is below the center of buoyancy of the flow line bundle.

The flow line bundle 14 is constructed of several segments of pipe and is held in an approximate catenary between the vessels 2 and 4 by the lines 10 and 12 when the conduit apparatus 8 is towed through the body of water 6. During relatively low speed towing, the flow line 14 is maintained or positioned at a first position in response primarily to the weight of the weight means 16 and/or the tension of the tow lines 10 and 12.

The weight means 16 imparts neutral or negative buoyancy to the flow line 14, and more generally, to the conduit apparatus 8 by adding weight to the combination until the positive buoyancy of the flow line 14 is equaled or exceeded. Neutral buoyancy is achieved when the flow line 14 is at a distance above a floor 40 of the body of water 6 where a sufficient amount of the weight means 16 depends from the flow line 14 to equal the positive buoyancy of the flow line 14 and the remainder of the weight means 16 engages or lies on the sea floor 40.

The weight means 16 particularly includes a plurality of elongated members shown in FIG. 1 as chains 42. The plurality of chains 42 are connected to the flow line 14 at spaced locations therealong. The chains 42 hang down or depend from the flow line 14 in a manner such that when the flow line 14 is towed through the body of water 6, the chains 42 resist the water. This resistance caused by the relative movement between the water and the chains 42 creates a hydrodynamic lifting force acting on the flow line 14 which tends to raise the conduit apparatus 8 above the first position of neutral buoyancy or tensioned tow toward the surface of the water 6. The magnitude of the lifting force varies with the speed at which the apparatus 8 is towed through the body of water 6. For example, it has been determined that above a speed of approximately three knots, a flow line bundle of a few thousand feet (e.g., 6580 feet) having chains 42 spaced approximately sixty feet along the length thereof enters a relatively higher speed towing state wherein the chains themselves form catenary shapes which cause upward lifting components of sufficient magnitudes to lift the flow line toward the surface of the water. Below the speed of approximately three knots, a relatively lower speed towing state exists wherein the lifting force, if it exists at all, is insufficient to lift the flow line above its first position.

To provide a counterforce to offset the lifting force created by the weight means and its interaction with the water, the conduit apparatus 8 further includes the depressor means 18. The depressor means 18 interacts with the water 6 as the apparatus 8 is towed therethrough to impart a downward force to the flow line. The depressor means 18 causes the water to urge the flow line in a direction away from the surface so that the surface conditions will not affect the flow line during the towing operation.

The depressor means 18 includes a plurality of water deflecting elements 44 illustrated in the drawings in the form of baffles. Other depressor means 18 are disclosed in United States Patent No. 3,496,526 in the name of Rockwell, United States Patent No. 3,605,674 in the name of Weese, and United States Patent No. 3,673,556 in the name of Biggs, each of which is incorporated herein by reference. Other suitable depressor means can be used.

In the preferred embodiment each of the water deflecting elements 44 is located along the flow line 14 at a respective location which is substantially the same distance from an end of the flow line as the location of a respective one of the chains 42. This places each of the water deflecting elements substantially adjacent a respective location at which a chain 42 is connected to the flow line. In the preferred embodiment each water deflecting element is connected directly above the position from which one of the chains 42 depends. This adjacent positioning of each water deflecting element with a respective chain 42 reduces or

-9-

0069446

overcomes an oscillating or "snaking" motion which would otherwise be imparted to the flow line by the elongated elements or chains 42. The "snaking" motion is caused by a pendulum or swinging motion of the chains 42 which can occur during the towing operation. This motion can occur in any direction, such as vertically or horizontally, and primarily occurs during the higher speed towing state.

In the preferred embodiment each of the water deflecting elements 44 is controllable so that the downward acting force component created by the interaction between the water and the depressor means can be varied to control the depth at which the conduit apparatus 8 is towed through the body of water 6. For example, when the baffles 44 illustrated in FIGS. 1 and 2 are raised to a position closer to the vertical (for example, as shown in FIG. 1), a greater downward force component is created so that the conduit apparatus 8 is caused to float closer to the floor 40, such as in its neutral buoyancy position. It is also possible to provide, by means of the depressor means 18, a downward force of such magnitude that the conduit apparatus 8 is caused to float at a position below its neutral buoyancy position.

With reference to FIG. 2, the baffles 44 are positioned farther from the vertical so that a lesser depressive force is created. This permits the conduit apparatus 8 to rise to a position farther above the floor 40 as illustrated in FIG. 2. Therefore, by controlling the angle of the baffle type of depressor means 18, the depth at which the conduit apparatus 8 is maintained can be controlled. Control of the depressor means 18 can be by hydraulic control lines from either or both of the vessels 2 and 4, by electric signals from the vessels, by depth sensing apparatus self-contained in the depressor means, or by any other suitable means. Other suitable types of depressor means can also be used. For example, the depressor means can include conduits through which jets of water are directed for positioning the conduit apparatus 8.

During the operation of the present invention, the lead vessel 2 and the trail vessel 4 transport the conduit apparatus 8 through the body of water 6 at various speeds. These various speeds can be separated into two ranges for purposes of the present invention. A first speed range or state of transportion of the apparatus 8 occurs at first speeds which are below the boundary or threshold speed separating the state of operation wherein sufficient forces to raise the conduit apparatus 8 act thereon from the state or operation wherein the positioning of the conduit apparatus 6 is not significantly, if at all, affected by any lifting forces created by the weight means 16. A second range of state of transportation of the apparatus 8 occurs at second speeds which are above the boundary speed.

When the speed is below the boundary speed at which the towing operation enters what will be called the lifting state, the depth of the conduit apparatus 6 is primarily determined by the tensioning of the tow lines 10 and 12 and/or the neutral buoyancy positioning of the flow line. In the preferred embodiment wherein a flow line having a length of between approximately 2600 feet and 6600 feet is to be towed, the speed at which the lifting state is entered has been found to be approximately three knots.

When the speed of tow increases above the boundary or threshold speed, each of the chains 42 of the weight means 16 forms a catenary which resists the water 6 and imparts a lifting force which adds to make a total force of sufficient magnitude to raise the apparatus 8 above its original or former position. At this point of operation the depressor means 18 is controlled so that a downward force countering or offsetting the lifting force is created to position the flow line 14 at a selectable depth. In this manner both the weight means and the depressor means coact with the water to position the flow line at a selectable depth. The depressor means also reduces or prevents a "snaking" motion which can be imparted to the flow line. This is achieved by placing the depressor means elements at the same distances
along the flow line as are the weight means elements.  With
the baffle type of deflector means described hereinabove
vertical "snaking" motion is particularly compensated.

-12-

CLAIMS:

1.  A conduit apparatus transportable through a body of water, comprising:

    a flow line;

    weight means, connected to said flow line, for imparting negative buoyancy to said flow line; and

    depressor means, connected to said flow line, for causing the water to urge said flow line in a direction away from the surface of said body of water.

2.  An apparatus as defined in claim 1, wherein said depressor means is connected at a location along said flow line which is substantially the same distance from an end of said flow line as the location along said flow line at which said weight means is connected.

3.  A conduit apparatus transportable through a body of water, comprising:

    a flow line;

    weight means depending from said flow line, said weight means being constructed such that when said flow line is transported through said body of water a lifting force created by said weight means acts on said flow line; and

    depressor means, connected to said flow line, for providing a counterforce to said lifting force.

4.  An apparatus as defined in claim 3, wherein said depressor means is connected to said flow line at a position substantially directly above the position from which said weight means depends from said flow line.

5.  A conduit apparatus, comprising:

    a flow line transportable through a body of water;

    weight means depending from said flow line in the form of a catenary; and

-13-

0069446

depressor means, connected to said flow line, for
imparting a downward force to said flow line
as said flow line is transported through said
body of water.

6. An apparatus as defined in claim 5, wherein:
said weight means includes a plurality of chains
connected to said flow line at spaced locations
therealong; and
said depressor means includes a plurality of water
deflecting elements each of which is connected
to said flow line at a location adjacent a
respective one of the locations at which said
chains are connected to said flow line.

7. A conduit apparatus, comprising:
a flow line transportable through a body of water;
a plurality of elongated members, connected at
spaced locations along said flow line, said
elongated members being constructed such that
when said flow line is transported through
said body of water in a first state of transportation said elongated members insufficiently
interact with said body of water that said
flow line is not raised above a position primarily established by tension applied to said
flow line, but such that when said flow line
is transported through the body of water in a
second state of transportation said elongated
members coact with said body of water that a
lifting force sufficient to raise said flow
line is imparted to said flow line; and
depressor means, connected to said flow line, for
providing a force to offset said lifting force
in said second state.

8. An apparatus as defined in claim 7, wherein said
depressor means includes a plurality of water deflecting elements, each of which is connected to said flow line at a location adjacent a respective one of the locations at which said elongated members are connected to said flow line so that a motion imparted to said flow line by said elongated members is reduced.

9.  An apparatus as defined in claim 8, wherein:
    said elongated members move with a pendulum motion in said second state of transportation, said pendulum motion tending to impart a vertical snaking motion to said flow line; and
    said water deflecting elements include baffle means for reducing said vertical snaking motion.

10. A conduit towing system, comprising:
    a first powered vessel;
    a second powered vessel;
    a flow line;
    connecting means for connecting said flow line between said first and second powered vessels and for being tensioned to maintain said flow line at a first position when said first and second vessels move said flow line at a first rate of speed;
    weight means connected to said flow line and being constructed so that a lifting force tending to raise said flow line to a second position above said first position is created when said first and second vessels move said flow line at a second rate of speed; and
    depressor means, connected to said flow line, for providing a force to offset said lifting force when said flow line is moved at said second speed.

11. An apparatus as defined in claim 10, wherein:
said weight means includes a plurality of chains connected to said flow line at spaced locations therealong; and
said depressor means includes a plurality of water deflecting elements each of which is connected to said flow line at a location adjacent a respective one of the locations at which said chains are connected to said flow line.

12. A method of transporting a flow line through a body of water, said flow line having weight means and depressor means connected thereto, said method comprising the steps of:
towing said flow line through said body of water so that said weight means has a catenary shape and creates a lifting force acting on said flow line; and
controlling said depressor means so that a downward force countering said lifting force is created to position said flow line at a selectable depth.

13. A method of transporting a flow line through a body of water at a controllable depth, comprising the steps of:
attaching weight means to said flow line to make said flow line negatively buoyant;
connecting depressor means to said flow line to apply a downward force to said flow line; and
towing said flow line through said body of water so that said weight means and said depressor means coact to position said flow line at a selectable depth.

14. A method as defined in claim 13, wherein:
the step of attaching weight means includes the
step of positioning a plurality of chains at
respective locations along said flow line; and
the step of connecting depressor means includes
the step of locating a plurality of water
deflecting elements at respective locations
along said flow line adjacent the respective
locations at which said chains are positioned.


15. A method as defined in any of claims 12 to 14,
wherein the step of towing said flow line includes the
steps of:
connecting a first line between a first end of
said flow line and a lead powered vessel;
connecting a second line between a second end of
said flow line and a trail powered vessel; and
activating said lead and trail powered vessels
to tow said flow line through said body of
water.

FIG. 1

FIG. 2

FIG. 3

# European Patent Office

## EUROPEAN SEARCH REPORT

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| A | US – A – 4 063 430 (LAMY) | | F 16 L 1/04 |
| A | FR – A – 1 222 669 (S.E.G.A.N.S.) | | |
| D,A | US – A – 4 033 278 (WATERS) | | |
| D,A | US – A – 3 673 556 (BIGGS) | | |
| D,A | US – A – 3 605 674 (WEESE) | | TECHNICAL FIELDS SEARCHED (Int.Cl. ³) |
| D,A | US – A – 3 496 526 (ROCKWELL) | | |
| D,A | US – A – 2 572 255 (GALLAWAY) | | F 16 L 1/00 |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search | Date of completion of the search | Examiner | |
| Berlin | 02-07-1982 | SCHLABBACH | |

EPO Form 1503.1   06.78